# EUROPEAN PATENT APPLICATION

(11) **EP 2 163 855 A2**
(43) Date of publication of application: **17.03.2010**
(21) Application number: 09169915.7
(22) Date of filing: 10.09.2009
(51) Int. Cl.: G01D 5/165

(54) **Rotation angle detection device and rotation angle detection apparatus in throttle body**

(30) Priority: 12.09.2008 JP 2008234107
(71) Applicant: Keihin Corporation, Tokyo 163-0539 (JP)
(72) Inventor: Yanagii, Yoichi, Kawasaki-shi Kanagawa (JP); Toriumi, Masahiro, Kawasaki-shi Kanagawa (JP)
(74) Representative: Prechtel, Jörg

(57) **Abstract**

An object of the present invention is to provide a rotation angle detection device which allows to retain the angle detection accuracy for a long period of time and to reduce the frequency of maintenance of a rotation angle sensor. A rotation angle detection device includes: a variable-resistance type rotation angle sensor including a rotor, a brush, and a rotor return spring, the rotor being rotatably arranged inside a casing and having a locking recessed portion concavely formed in an end portion of the rotor, the locking recessed portion having a pair of locking face portions formed therein, each of the locking face portions facing toward a center of the locking recessed portion, the brush being arranged on the rotor and moving in sliding contact with a resistor fixed to the casing, the rotor return spring urging the rotor rotationally in a certain direction; and a sensor drive shaft having a locking protruding portion integrally formed thereon, the locking protruding portion being inserted and arranged in the locking recessed portion of the rotor of the rotation angle sensor while being brought into contact with any of the locking face portions. The rotation angle detection device transmits rotation of the sensor drive shaft to the locking face portion of the rotor via the locking protruding portion, so as to output a voltage signal proportional to a rotational displacement of the sensor drive shaft. The locking protruding portion is formed of a cylindrical shaft having a circular cross-section and is arranged so that a longitudinal axis line of the cylindrical shaft is arranged in parallel with, and eccentrically with respect to, a longitudinal axis line of the sensor drive shaft, and the locking protruding portion formed of the cylindrical shaft is arranged to be brought into contact with the locking face portion of the rotor by the rotor return spring.

## Description

### BACKGROUND OF THE INVENTION

### FIELD OF THE INVENTION

The present invention relates to: a rotation angle detection device that causes a rotor to rotate in synchronization with a rotation of a sensor drive shaft so as to slide on a resistor a brush fixed to the rotor, and thus outputs to the outside a voltage signal proportional to a change in the rotation angle of the sensor drive shaft; and a rotation angle detection apparatus for a throttle-valve shaft in a throttle body, the apparatus employing the rotation angle detection device to detect a rotation angle of the throttle-valve shaft rotatably attached to the throttle body.

### DESCRIPTION OF THE RELATED ART

A conventional rotation angle detection device is disclosed in Japanese Patent Application Laid-open No. 2006-162528.

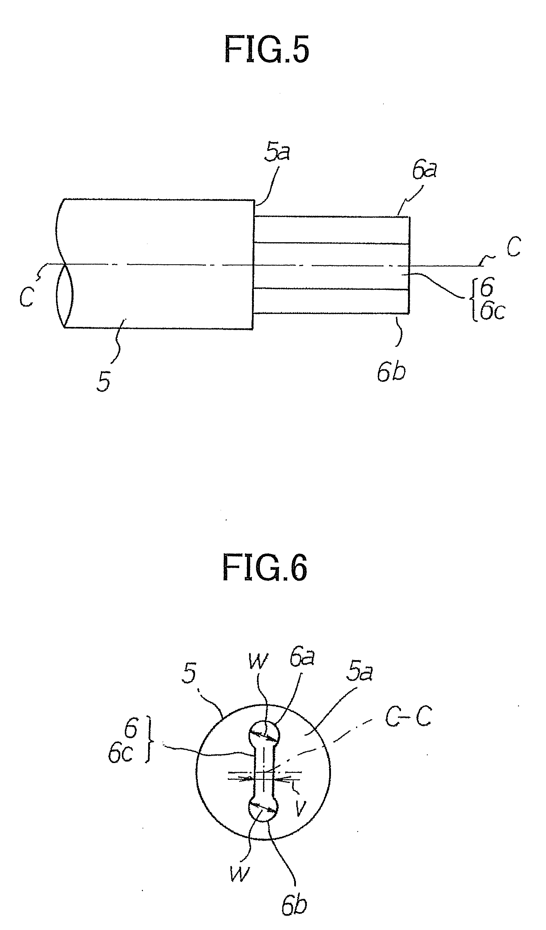

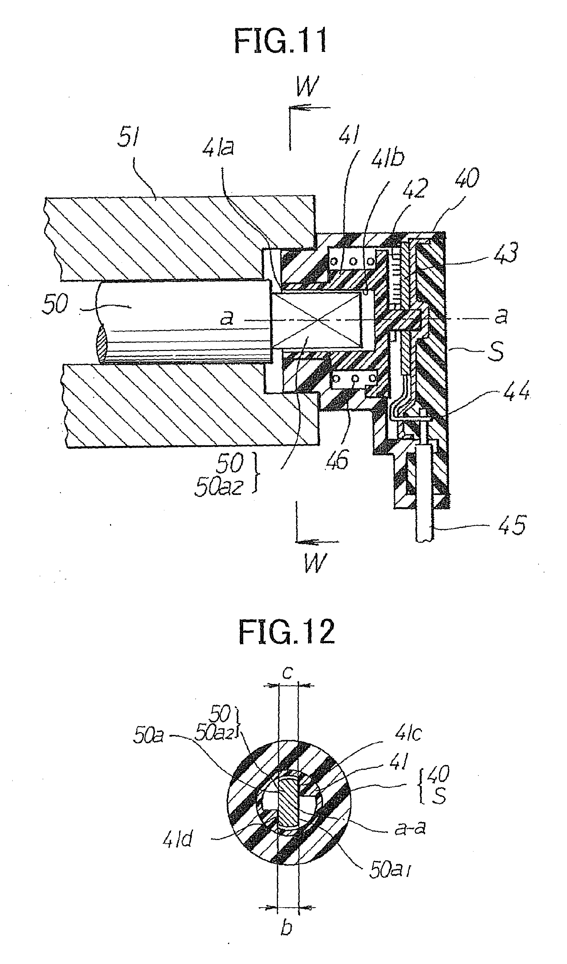

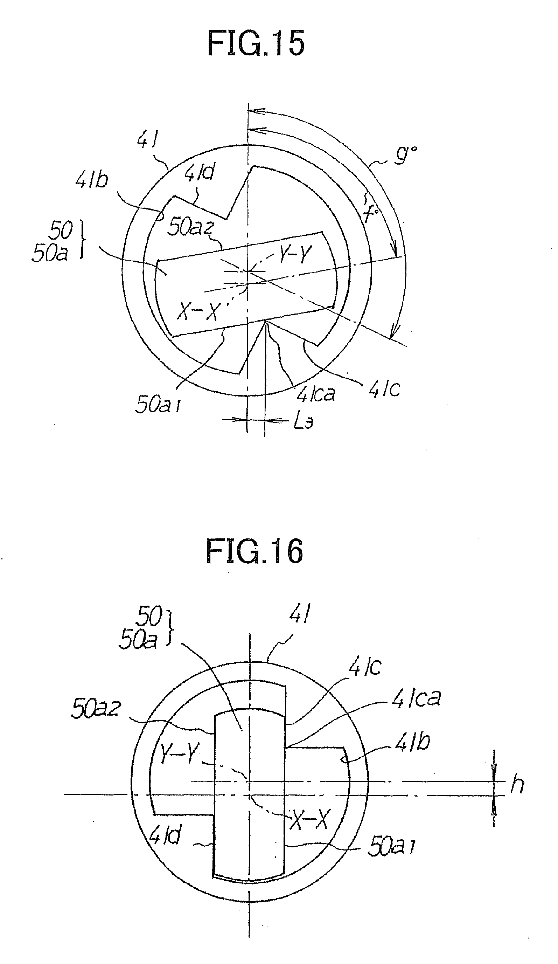

The conventional rotation angle detection device will be described with reference to FIGS. 11 and 12, which are drawn on the basis of FIGS. 6 and 15 in Japanese Patent Application Laid-open No. 2006-162528. FIG. 11 is a longitudinal cross-sectional view showing an essential part of the rotation angle detection device, and FIG. 12 is a longitudinal cross-sectional view taken along the line W-W in FIG. 11.

Reference symbol S denotes a variable-resistance type rotation angle sensor. A rotor 41, a brush 42, and a resistor 43 are housed inside a casing 40. The rotor 41 is supported in the casing 40 so as to be rotatable about a rotation axis a-a. A locking recessed portion 41b is formed concavely in an end portion 41a of the rotor 41 (i.e. on the left end face thereof in FIG. 11). Moreover, a pair of locking face portions 41c and 41d each projecting toward the center (in other words, toward the rotation axis a-a) are formed symmetrically in the locking recessed portion 41b. The pair of locking face portions 41c and 41d, which are shown in FIG. 12, are formed symmetrically with respect to the rotation axis a-a with a two-face width b therebetween.

The brush 42 is arranged on the other end portion of the rotor 41 (i.e. on the right end face thereof in FIG. 11). The brush 42 moves in sliding contact with the resistor 43 that is fixedly arranged inside the casing 40. Note that, reference numeral 44 denotes a terminal connected to the resistor 43. The terminal 44 is connected to a lead wire 45 extending from the casing 40 to the outside.

Reference numeral 50 denotes a sensor drive shaft rotatably supported in a fixing member 51. A locking protruding portion 50a is formed to protrude on the right end of the sensor drive shaft 50. The locking protruding portion 50a is arranged in such a manner as to be inserted into the locking recessed portion 41b of the rotor 41, and to be brought into contact with the locking face portions 41c and 41d.

Specifically, the locking protruding portion 50a includes flattened portions 50a1 and 50a2 which are brought into contact with the locking face portions 41c and 41d, respectively. The flattened portions 50a1 and 50a2 have a flattened thickness c therebetween.

The variable-resistance type rotation angle sensor S is fixedly arranged on the fixing member 51. At this occasion, the locking protruding portion 50a of the sensor drive shaft 50 is inserted into the locking recessed portion 41b of the rotor 41. The flattened portions 50a1 and 50a2 of the locking protruding portion 50a come into contact respectively with the locking face portions 41c and 41d. These motions are attributed to the mechanism that the rotor 41 is urged in a counterclockwise direction in FIG. 12 by a rotor return spring 46 arranged inside the casing 40.

In the conventional rotation angle detection device described above, the rotation of the sensor drive shaft 50 is transmitted to the locking face portions 41c and 41d via the flattened portions 50a1 and 50a2 of the locking protruding portion 50 so as to synchronously rotate the rotor 41. Along with the rotation of the rotor 41, the brush 42 moves while being in sliding contact with the resistor 43. As a result, a voltage signal proportional to a change in rotation angle of the sensor drive shaft 50 is outputted to the outside through the lead wire 45 of the variable-resistance type rotation angle sensor S.

Here, according to the conventional rotation angle detection device described above, the relative rotation angle between the sensor drive shaft 50 and the rotor 41 changes in some cases, for example, where the rotation angle detection device is used for a long period of time. Such a difference may change the correlation between the rotation angle of the sensor drive shaft 50 and the output of the voltage signal from the rotation angle detection device.

This is considered to be caused as follows.

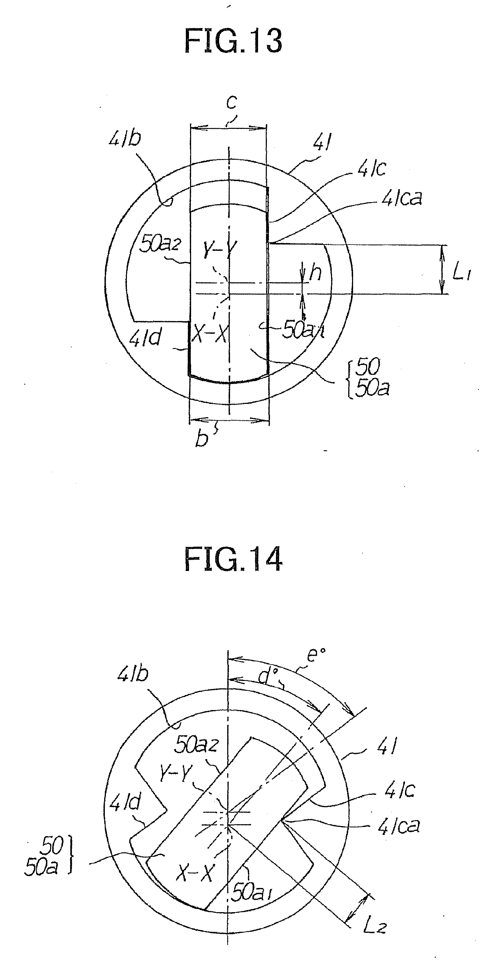

Description will be given with reference to FIGS. 13, 14, and 15. FIG. 13 shows an original position state where the sensor drive shaft 50 is located at an original position. The sensor drive shaft 50 is arranged on the rotation center X-X, and the flattened portions 50a1 and 50a2 of the locking protruding portion 50a form the flattened thickness c therebetween.

On the other hand, the locking face portions 41c and 41d of the rotor 41 form the two-face width b therebetween, the two-face width b being substantially the same dimension as the flattened thickness c of the flattened portions 50a1 and 50a2. The rotation center Y-Y of the rotor 41 is arranged eccentrically upward by a distance h with respect to the rotation center X-X of the sensor drive shaft 50.

In the original position state shown in FIG. 13, the rotor 41 and the sensor drive shaft 50 are arranged to have the same angle, and the distance between the rotation center X-X of the sensor drive shaft 50 and a corner portion 41ca of the locking face portion 41c of the locking recessed portion 41b is kept at L1.

Next, while the sensor drive shaft 50 rotates from the original position state shown in FIG. 13 to a first rotated state in a clockwise direction about the rotation center X-X by a rotation angle (d°), the rotor 41 rotates in the clockwise direction about the rotation center Y-Y by an angle (e°) that is larger than the rotation angle (d°) of the sensor drive shaft 50. In this event, the distance between the rotation center X-X of the sensor drive shaft 50 and the corner portion 41ca of the locking face portion 41c is set at L2 that is shorter than the distance L1 in the original position state shown in FIG. 13.

Next, while the sensor drive shaft 50 rotates from the original position state shown in FIG. 13 to a second rotated state in the clockwise direction about the rotation center X-X by a rotation angle (f°) that is larger than the rotation angle (d°), the rotor 41 rotates in the clockwise direction about the rotation center Y-Y by an angle (g°) that is larger than the rotation angle (f°) of the sensor drive shaft 50. In this event, the distance between the rotation center X-X of the sensor drive shaft 50 and the corner portion 41ca of the locking face portion 41c is set at L3 that is further shorter than the distance L2 in the first rotated state shown in FIG. 14 (in the above description, the angle f° > the angle d°, and the angle g° > the angle e°).

As described above, the distance L between the rotation center X-X of the sensor drive shaft 50 and the corner portion 41ca of the locking face portion 41c of the locking recessed portion 41b decreases from L1 to L2, and to L3 (L1 > L2 > L3) as the rotation angle of the sensor drive shaft 50 increases. This change is because the rotation center X-X of the sensor drive shaft 50 and the rotation center Y-Y of the rotor 41 are eccentrically arranged with respect to each other.

It is conceivable that the rotation centers X-X and Y-Y of the sensor drive shaft 50 and the rotor 41 are concentrically arranged so that the distance L should be kept from changing and be thus maintained constant. It is, however, extremely difficult in manufacture to completely concentrically arrange the rotation centers X-X and Y-Y, in terms of: the accuracy in machining the sensor drive shaft 50 including the locking protruding portion 50a and the rotor 41 including the locking face portion 41c; the accuracy in assembling the rotor 41 onto the variable-resistance type rotation angle sensor S; the accuracy in assembling the variable-resistance type rotation angle sensor S and the sensor drive shaft 50 onto the fixing member 51; and the like. Even if achieved, such arrangement significantly increases the manufacture cost, and will not lead to mass-productivity.

Consider that the distance L between the rotation center X-X of the sensor drive shaft 50 and the corner portion 41ca of the locking face portion 41c changes from L1 through L2 to L3, or from L3 through L2 to L1, in conjunction with the rotation of the sensor drive shaft 50, as described above. During the rotation of the sensor drive shaft 50, the corner portion 41ca of the locking face portion 41c of the rotor 41 moves in contact with the flattened portion 50a1 of the locking protruding portion 50a of the sensor drive shaft 50. Accordingly, one of the contacting portions, for example, the locking face portion 41c of the rotor 41 is worn, so that the correlation of the rotation angle of the rotor 41 to the rotation angle of the sensor drive shaft 50 changes.

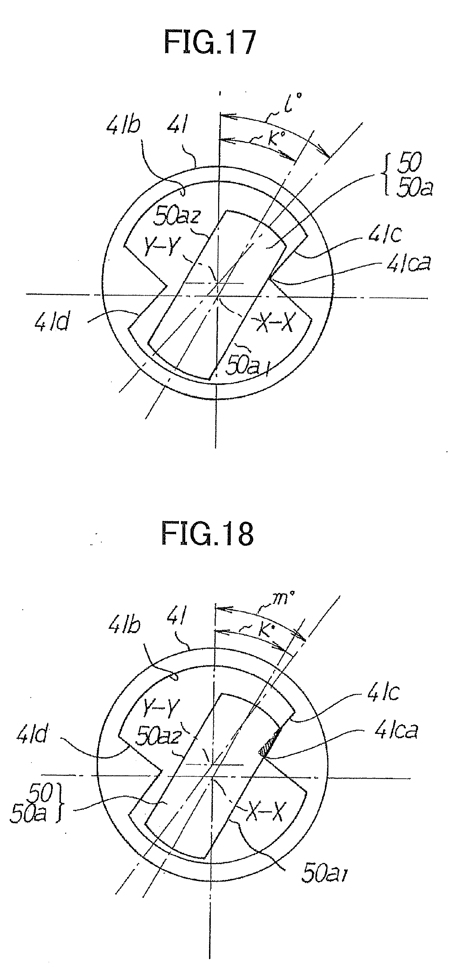

For example, in FIG. 17, in an initial state where the corner portion 41ca of the locking face portion 41c of the rotor 41 and the flattened portion 50a1 of the sensor drive shaft 50 are in contact with each other, the rotation angle of the sensor drive shaft 50 is K° while the rotation angle of the rotor 41 is L° that is larger than K°. Here, consider a case where the corner portion 41ca of the locking face portion 41c is worn due to the use for a long period of time. In this case, when the rotation angle of the sensor drive shaft 50 is K°, the rotation angle of the rotor 41 is m° that is smaller than the rotation angle (L°) thereof in the initial state. This is clearly illustrated in FIG. 18. The worn portion in the locking face portion 41c is shown by diagonal lines in FIG. 18, and the rotor 41 is rotated in the counterclockwise direction in accordance with the wear.

In other words, although the rotation angle (K°) of the sensor drive shaft 50 is a certain rotational angle, the rotation angle of the rotor 41 is changed by the wear of the corner portion 41ca of the locking face portion 41c to the angle (m°) that is smaller than the angle (L°) in the initial state. Accordingly, a difference occurs between the initial state and the state after the use for a long period of time in the relative rotation angle of the rotation angle of the rotor 41 with respect to the rotation angle of the sensor drive shaft 50.

### SUMMARY OF THE INVENTION

A rotation angle detection device according to the present invention has been made with the above-described defects. An object of the present invention is to provide a rotation angle detection device which allows a rotational angle sensor to retain the angle detection accuracy for a long period of time and allows to reduce the frequency of maintenance of the rotation angle sensor.

In order to achieve the object, according to a first feature of the present invention, there is provided a rotation angle detection device including: a variable-resistance type rotation angle sensor including a rotor, a brush, and a rotor return spring, the rotor being rotatably arranged inside a casing and having a locking recessed portion concavely formed in an end portion of the rotor, the locking recessed portion having a pair of locking face portions formed therein, each of the locking face portions facing toward a center of the locking recessed portion, the brush being arranged on the rotor and moving in sliding contact with a resistor fixed to the casing, the rotor return spring urging the rotor rotationally in a certain direction; and a sensor drive shaft having a locking protruding portion integrally formed thereon, the locking protruding portion being inserted and arranged in the locking recessed portion of the rotor of the rotation angle sensor while being brought into contact with any of the locking face portions, the rotation angle detection device transmitting rotation of the sensor drive shaft to the locking face portion of the rotor via the locking protruding portion, so as to output a voltage signal proportional to a rotational displacement of the sensor drive shaft, **characterized in that** the locking protruding portion is formed of a cylindrical shaft having a circular cross-section and is arranged so that a longitudinal axis line of the cylindrical shaft is arranged in parallel with, and eccentrically with respect to, a longitudinal axis line of the sensor drive shaft, and the locking protruding portion formed of the cylindrical shaft is arranged to be brought into contact with the locking face portion of the rotor by the rotor return spring.

According to the first feature of the present invention, as for the sensor drive shaft and the rotor, the locking protruding portion arranged eccentrically with respect to the sensor drive shaft and formed of the cylindrical shaft is arranged to be brought into contact with any of the locking face portions of the rotor by being urged by the spring force of the rotor return spring. Thus, the rotation angle due to the rotation of the sensor drive shaft is transmitted to the locking face portion via the locking protruding portion formed of the cylindrical shaft.

According to the above-described configuration, the following effect can be obtained. If the rotation axis of the sensor drive shaft and the rotation axis of the rotor are eccentrically arranged from each other, the locking protruding portion formed of the cylindrical shaft moves in contact with the locking face portion of the rotor during the rotation of the sensor drive shaft. In this event, since the locking protruding portion is the cylindrical shaft, the round-shaped portion of the locking protruding portion moves on the locking face portion. Accordingly, the sliding performance between the locking protruding portion and the locking face portion is improved, so that wear does not occurs in any of the locking protruding portion and the locking face portion.

Therefore, it is possible to provide a rotation angle detection device that can keep its capability of accurate angle detection for a long period of time, and to reduce the frequency of maintenance of the rotation angle detection device.

In addition, to achieve the device, it is only required to attach a locking protruding portion formed of a cylindrical shaft to a conventional sensor drive shaft; the device can be achieved easily and at a low cost with compatibility to conventional rotation angle sensors.

According to a second feature of the present invention, in addition to the first feature, the rotor is made of a synthetic resin material including glass fibers, and the locking protruding portion and the sensor drive shaft are formed as separate members from each other, and the locking protruding portion is press-fitted into an end face of the sensor drive shaft.

According to the second feature of the present invention, the locking protruding portion and the sensor drive shaft are formed as separate members from each other. Accordingly, the locking protruding portion, in particular, can be selected freely so as to match the material (the synthetic resin material including glass fibers) of the rotor.

In addition, since the locking protruding portion is press-fitted into the sensor drive shaft, the locking protruding portion may be selected as appropriate from commercially-available roller pins, wire rods, and the like, so that the manufacture cost thereof can be reduced.

According to a third feature of the present invention, in addition to the second feature, the locking protruding portion and the sensor drive shaft are made of different materials from each other.

According to the third feature of the present invention, the locking protruding portion and the sensor drive shaft are made of different materials from each other. Accordingly, it is possible to select an inexpensive material particularly for the sensor drive shaft without taking into consideration the wear thereof, and thus to reduce the manufacture cost.

According to a fourth feature of the present invention, in addition to the second feature, a surface of the cylindrical shaft of the locking protruding portion is coated with a fluororesin, a polyamide resin, a polyacetal resin, and the like.

According to the fourth feature of the present invention, the surface of the locking protruding portion is coated with a fluororesin, a polyamide resin, and a polyacetal resin, which improves the sliding performance between the locking protruding portion and the locking face portions of the rotor. Accordingly, it is possible to effectively suppress an occurrence of wear at the contact portion therebetween.

According to a fifth feature of the present invention, in addition to the second feature, hard chrome plating and a nitriding treatment are applied to a surface of the cylindrical shaft of the locking protruding portion.

According to the fifth feature of the present invention, the surface of the locking protruding portion is subjected to the hard chrome plating and the nitriding treatment. Accordingly, it is possible to suppress an occurrence of wear of the locking protruding portion and the locking face portion of the rotor.

According to a sixth feature of the present invention, in addition to the first feature, the locking protruding portion and the sensor drive shaft are formed integrally of a synthetic resin material, and the locking protruding portion is formed of: cylindrical shaft portions as well as a rib, the cylindrical shaft portions being formed eccentrically and symmetrically on opposite lateral sides with respect to the longitudinal axis line of the sensor drive shaft, the rib connecting the cylindrical shaft portions to each other and having a width smaller than the diameter of the cylindrical shaft portion.

In addition, according to the sixth feature of the present invention, it is possible to improve the rigidity of the locking protruding portion when the locking protruding portion and the sensor drive shaft are formed integrally by use of a synthetic resin material. Accordingly, this is favorable in a case where the sensor drive shaft is formed of a synthetic resin material.

Moreover, the cylindrical shaft portions, which are formed symmetrically, are connected to each other by the rib having a width smaller than the diameter of the cylindrical shaft portions. Accordingly, the rib never comes into contact with the locking face portions of the locking recessed portion of the rotor, and thus the rotation of the sensor drive shaft can be accurately transmitted to the rotor.

Further, since the cylindrical shaft portions are formed symmetrically on opposite sides with respect to the center of the sensor drive shaft, the assemblability can be improved in inserting the locking protruding portion into the locking recessed portion of the rotor.

According to a seventh feature of the present invention, there is provided a rotation angle detection apparatus for a throttle-valve shaft in a throttle body, comprising: a throttle body having an intake passage drilled to penetrate an inside of the throttle body; and a throttle-valve shaft rotatably supported in the throttle body while traversing the intake passage, the throttle-valve shaft having a throttle valve attached thereto for opening and closing the intake passage, wherein a locking protruding portion that is a cylindrical shaft having a circular cross-section is formed integrally on an end face of the throttle-valve shaft, the locking protruding portion being arranged in parallel with a longitudinal axis line of the throttle-valve shaft, and eccentrically with respect to the longitudinal axis line, and the locking protruding portion is inserted into a locking recessed portion of a rotor of a rotation angle sensor attached to the throttle body, and is brought into contact with any of a pair of locking face portions by a rotor return spring, the pair of locking face portions being formed in the locking recessed portion so as to face toward a center thereof.

Furthermore, according to the seventh feature of the present invention, the rotation of the throttle-valve shaft is transmitted to the pair of locking face portions in the locking recessed portion of the rotor of the rotation angle sensor via the locking protruding portion formed of the cylindrical shaft. Accordingly, it is possible to suppress wear between the locking protruding portion and the locking face portion. Thus, there occurs no difference in relative rotation angle between the rotation angle of the throttle-valve shaft and the rotation angle of the rotor of the rotation angle sensor for an extended period of time. For this reason, the rotation angle detection apparatus is capable of detecting the rotation angle of the throttle-valve shaft stably and accurately for a long period of time by using the rotation angle sensor, and therefore to perform stable control on an internal combustion engine.

The above description, other objects, characteristics and advantages of the present invention will be clear from detailed descriptions which will be provided for the preferred embodiments referring to the attached drawings.

### BRIEF DESCRIPTION OF THE DRAWINGS

FIG. 1 is a longitudinal cross-sectional view of an essential part showing an embodiment of a rotation angle detection device according to the present invention.
FIG. 2 is a longitudinal cross-sectional view of the essential part, taken along the line A-A in FIG. 1.
FIG. 3 is a simplified view showing a relationship between a sensor drive shaft and a rotor in FIG. 1 in an original position state.
FIG. 4 is a simplified view showing a state where the sensor drive shaft is rotated by a certain angle from the state shown in FIG. 3.
FIG. 5 is a side view of a sensor drive shaft, the view showing another embodiment of the present invention.
FIG. 6 is a right-side view of FIG. 5.
FIG. 7 is a longitudinal cross-sectional view of an essential part showing a rotation angle detection device using the sensor drive shaft shown in FIG. 5.
FIG. 8 is a longitudinal cross-sectional view of the essential part, taken along the line H-H in FIG. 7.
FIG. 9 is a longitudinal cross-sectional view of an essential part showing an embodiment of a rotation angle detection apparatus for a throttle-valve shaft in a throttle body according to the present invention.
FIG. 10 is a longitudinal cross-sectional view of the essential part, taken along the line J-J in FIG. 9.
FIG. 11 is a longitudinal cross-sectional view of an essential part showing a conventional rotation angle detection device.
FIG. 12 is a longitudinal cross-sectional view of the essential part, taken along the line W-W in FIG. 11.
FIG. 13 is a simplified view showing a state where a locking protruding portion and a locking face portion are in an original position state and in contact with each other in the rotation angle detection device shown in FIG. 11.
FIG. 14 is a simplified view showing a first rotated state where a sensor drive shaft is rotated by a certain angle from the original position state in FIG. 13.
FIG. 15 is a simplified view showing a second rotated state where the sensor drive shaft is further rotated by a certain angle from the rotated state in FIG. 14.
FIG. 16 is a simplified view showing a contact state of the locking protruding portion and the locking face portion in the original position state.
FIG. 17 is a simplified view showing a contact state of the locking protruding portion and the locking face portion in the first rotated state where the sensor drive shaft is rotated by L degrees from the original position state in FIG. 16.
FIG. 18 is a simplified view showing a state where the locking face portion is worn by the locking protruding portion in the first rotated state in FIG. 17.

### DESCRIPTION OF THE PREFERRED EMBODIMENTS

Hereinafter, an embodiment of a rotation angle detection device according to the present invention will be described with reference to the drawings.

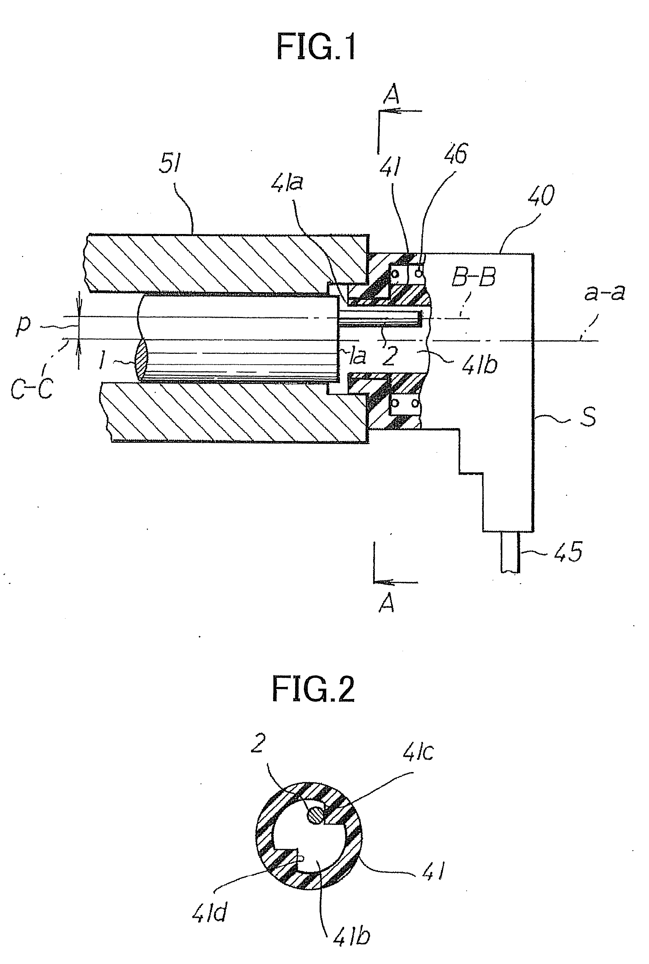

FIG. 1 is a longitudinal cross-sectional view of an essential part of the rotation angle detection device, and FIG. 2 is a longitudinal cross-sectional view of the essential part taken along the line A-A in FIG. 1.

A fixing member 51 and a variable-resistance type rotation angle sensor S in FIG. 1 are the same as those shown in FIG. 11. Accordingly, the same reference symbol and numeral are used therefor, and the description will be omitted.

Reference numeral 1 denotes a sensor drive shaft rotatably supported in the fixing member 51. A locking protruding portion 2, which is made of a cylindrical shaft having a circular cross-section, is formed integrally on an end face 1a (the right end face in FIG. 1) of the sensor drive shaft 1 so as to protrude to the right.

Note that, an object (not illustrated) whose rotation angle is intended to be detected is connected to the left end side of the sensor drive shaft 1.

The locking protruding portion 2 is arranged so that a longitudinal axis line B-B thereof is set in parallel with, and arranged eccentrically upward by a distance P from, a longitudinal axis line C-C of the sensor drive shaft 1.

The locking protruding portion 2 of the sensor drive shaft 1 is inserted into a locking recessed portion 41b of a rotor 41 of the variable-resistance type rotation angle sensor S, which is attached to the fixing member 51. At this time, the rotor 41 is urged, for example, in a counterclockwise direction in FIG. 2, by a spring force of a rotor return spring 46, so that a locking face portion 41c formed in the locking recessed portion 41b is brought into contact with an outer surface of the locking protruding portion 2.

According to the above-described configuration, the rotation of the sensor drive shaft 1 is transmitted to the rotor 41 from the locking protruding portion 2 via the locking face portion 41c, so that the sensor drive shaft 1 and the rotor 41 are synchronously rotated. As a result, a voltage signal corresponding to the rotation of the sensor drive shaft 1 is outputted by the variable-resistance type rotation angle sensor S.

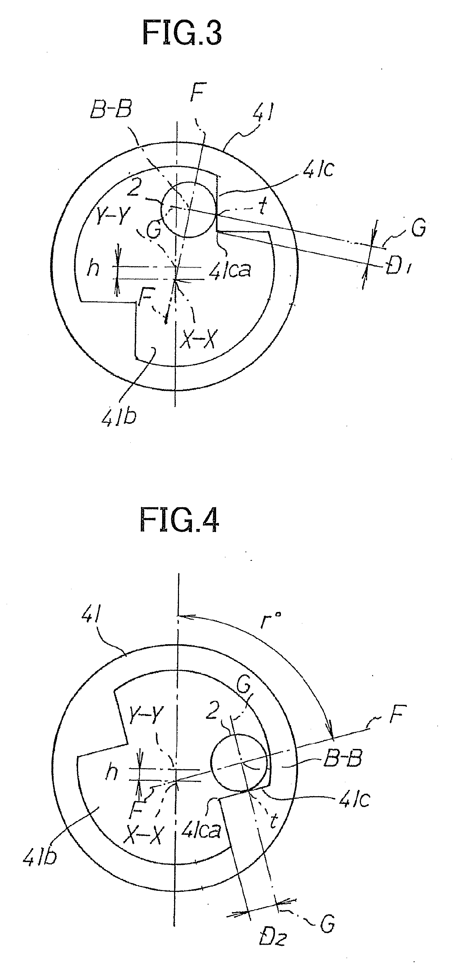

With reference to FIGS. 3 and 4, description will be given of a case where, in the rotation angle detection device of the present invention, the rotation center X-X of the sensor drive shaft 1 and the rotation center Y-Y of the rotor 41 are arranged eccentrically by a distance h with respect to each other as in the case of the conventional device.

FIG. 3 shows an original position state of the sensor drive shaft 1, and FIG. 4 shows a rotated state where the sensor drive shaft 1 is rotated from the original position state by an angle r° in the clockwise direction in FIG. 3.

In the original position state in FIG. 3, the locking protruding portion 2 and the locking face portion 41c are in contact with each other at a contact point t. In this state, the distance between the contact point t and a corner portion 41ca, closer to the center, of the locking face portion 41c is set at D1 (the contact point t is located on a line G-G that passes through the longitudinal axis line B-B of the locking protruding portion 2, and that is perpendicular to a line F-F connecting the rotation center X-X of the sensor drive shaft 1 to the longitudinal axis line B-B of the locking protruding portion 2).

Next, when the sensor drive shaft 1 rotates from the original position state in FIG. 3 by an angle r° in the clockwise direction as shown in FIG. 4, the distance between the contact point t and the corner portion 41ca, closer to the center, of the locking face portion 41c is set at D2. In this event, since the rotation center X-X of the sensor drive shaft 1 and the rotation center Y-Y of the rotor 41 are eccentric by the distance h, the distance between the contact point t and the corner portion 41ca decreases from D1 to D2. In other words, the relative position between the locking protruding portion 2 and the locking face portion 41c changes, causing a sliding movement.

In this regard, in the rotation angle detection device according to the present invention, the shape of the locking protruding portion 2 is formed in the cylindrical shaft having the circular cross-section, and the round-shaped portion of the cylindrical shaft is placed to be in contact with the locking face portion 41c. Accordingly, the sliding resistance is significantly reduced when the locking protruding portion 2 and the locking face portion 41c slide on each other, so that wear at the contact portions of the locking protruding portion 2 and the locking face portion 41c can be suppressed for a long period of time.

Therefore, even after the use for a long period of time, the relative rotation angle of the rotation angle of the rotor 41 to the rotation angle of the sensor drive shaft 1 can be accurately maintained, so that the rotation angle of the sensor drive shaft 1 can be stably detected with accuracy.

In addition, the above-described configuration makes it possible to reduce the frequency of maintenance of the rotation angle detection device, and thus to significantly improve the maintainability thereof.

Moreover, with a focus on the rotor 41, the above-described configuration does not require any modification to the conventional structure of the locking recessed portion 41b being formed inside the rotor 41 and including the locking face portion 41c, and the like, and thus can utilize a conventional variable-resistance type rotation angle sensor S as it is. Therefore, the above-described configuration has compatibility, and allows its required modification to be quite easily implemented.

Further, suppose a case where the locking protruding portion 2 is prepared as a separate member from the sensor drive shaft 1, and the locking protruding portion 2 thus prepared is press-fitted into the end face 1a of the sensor drive shaft 1. In this case, if the rotor 41 is made of a synthetic resin material including glass fibers, there is no special consideration required in selecting the material of the sensor drive shaft 1 in terms of slidability and wear resistance with respect to the rotor 41. Accordingly, the material of the sensor drive shaft 1 can be selected freely, so that the manufacture cost of the sensor drive shaft 1 can be reduced.

Further, as the locking protruding portion 2, a commercially available roller pin, wire rod, or the like can be used.

Moreover, in the above-described configuration, the manufacture cost can be further reduced by forming the locking protruding portion 2 and the sensor drive shaft 1 as separate members of different materials from each other, for example, by forming the locking protruding portion 2 of a stainless steel (SUS303 or the like) while forming the sensor drive shaft 1 of a free cutting steel (SUM24L or the like).

Furthermore, the surface of the locking protruding portion 2 formed as a separate member from the sensor drive shaft 1 may be coated with a fluororesin, a polyamide resin, a polyacetal resin, or the like. Alternatively, hard chrome plating and a nitriding treatment may be applied to the surface of the locking protruding portion 2. In this way, the slidability and wear resistance between the locking protruding portion 2 and the locking face portion 41c of the rotor 41 can be further improved.

Next, another embodiment of the present invention will be described with reference to FIGS. 5 and 6.

FIG. 5 is a side view of an essential part of a sensor drive shaft, and FIG. 6 is a right-side view of FIG. 5.

Reference numeral 5 denotes a sensor drive shaft, which is similar to the sensor drive shaft 1 illustrated in FIG. 1. A locking protruding portion 6 formed to protrude on an end face 5a of the sensor drive shaft 5 is different from the locking protruding portion 2 in FIG. 2.

The locking protruding portion 6 protrudes to the right from the end face 5a of the sensor drive shaft 5, and is formed of: cylindrical shaft portions 6a and 6b each having a circular cross-section; and a rib 6c connecting the cylindrical shaft portions 6a and 6b to each other. The cylindrical shaft portions 6a and 6b are formed eccentrically and symmetrically on opposite lateral sides with respect to a longitudinal axis line C-C of the sensor drive shaft 5. In addition, the rib 6c is formed to have a width V that is smaller than a diameter W of each of the cylindrical shaft portions 6a and 6b.

The sensor drive shaft 5, which includes the locking protruding portion 6 formed of the rib 6c as well as the cylindrical shaft portions 6a and 6b, is integrally injection-molded by using a synthetic resin material.

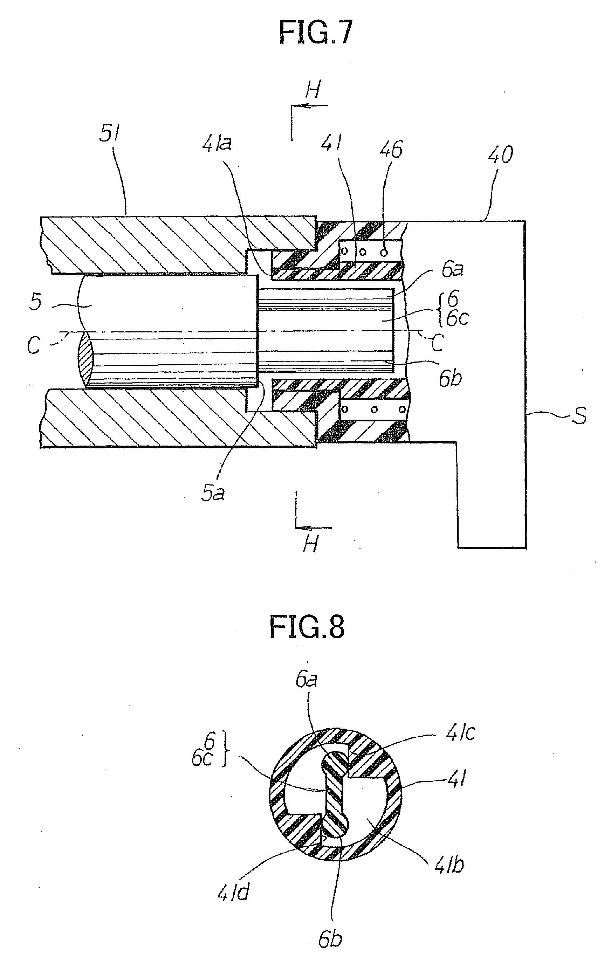

The sensor drive shaft 5 is rotatably supported in a fixing member 51 as in the case shown in FIG. 1. As illustrated in FIG. 7, the locking protruding portion 6 of the sensor drive shaft 5 is inserted into a locking recessed portion 41b of a rotor 41 of a variable-resistance type rotation angle sensor S. In this state, as illustrated in FIG. 8, the cylindrical shaft portion 6a of the locking protruding portion 6 is arranged in contact with a locking face portion 41c while the cylindrical shaft portion 6b is arranged in contact with a locking face portion 41d. In this way, the rotation of the sensor drive shaft 5 is transmitted to the rotor 41. As a result, the rotation angle of the sensor drive shaft 5 is outputted by the variable-resistance type rotation angle sensor S.

Here, according to the rotation angle detection device of this embodiment, the locking protruding portion 6, which is formed integrally with the sensor drive shaft 5, is formed of the cylindrical shaft portions 6a and 6b as well as the rib 6c connecting the cylindrical shaft portions 6a and 6b to each other. This formation enhances the rigidity of the locking protruding portion 6 when the locking protruding portion 6 and the sensor drive shaft 5 are integrally molded by using the synthetic resin material. In this way, the sensor drive shaft 5 including the locking protruding portion 6 can be formed of the synthetic resin material.

Moreover, since the width V of the rib 6c is made smaller than the diameter W of the cylindrical shaft portions 6a and 6b, the rib 6c never comes into contact with the locking face portions 41c and 41d of the rotor 41 during the rotation of the sensor drive shaft 5. Accordingly, the rotation of the sensor drive shaft 5 can be transmitted to the rotor 41 only via the cylindrical shaft portions 6a and 6b. As a result, the rotation angle of the sensor drive shaft 5 can be detected accurately.

Furthermore, the formation of the sensor drive shaft 5 including the locking protruding portion 6 by using the synthetic resin material in the above-described manner makes it possible to achieve a reduction in the manufacture cost, an improvement in the corrosion resistance, and a reduction in the weight.

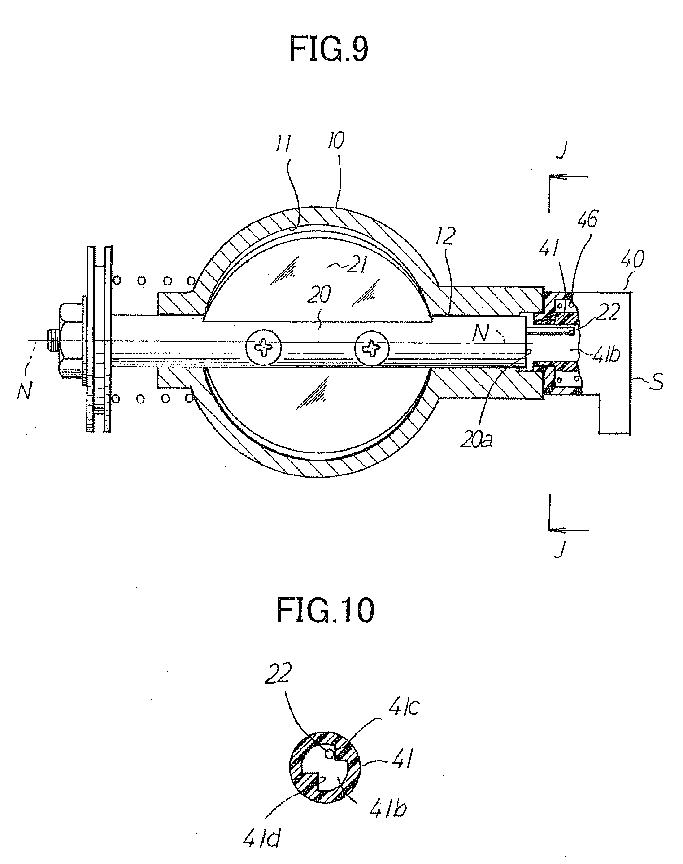

FIGS. 9 and 10 show an embodiment in which the rotation angle detection device shown in FIG. 1 is used as an apparatus for detecting the rotation angle of a throttle-valve shaft in a throttle body.

FIG. 9 is a longitudinal cross-sectional view of an essential part showing the rotation angle detection apparatus for the throttle-valve shaft in the throttle body, and FIG. 10 is a longitudinal cross-sectional view of the essential part, taken along the line J-J in FIG. 9.

In this embodiment, the fixing member 51 shown in FIG. 1 corresponds to a throttle body 10, and the sensor drive shaft 1 including the locking protruding portion 2 corresponds to a throttle-valve shaft 20.

The throttle body 10 includes an intake passage 11 drilled to penetrate the inside of the throttle body 10. The intake passage 11 is opened and closed by a butterfly throttle valve 21 attached to the throttle-valve shaft 20.

The throttle-valve shaft 20 is rotatably supported in a guide hole 12 drilled in the throttle body 10. A locking protruding portion 22 is formed integrally on, and protrudes from, an end face 20a of the throttle-valve shaft 20. The locking protruding portion 22 is a cylindrical shaft having a circular cross-section, and is arranged in parallel with a longitudinal axis line N-N of the throttle-valve shaft 20, and eccentrically with respect to the longitudinal axis line N-N.

The locking protruding portion 22 formed integrally on the throttle-valve shaft 20 is inserted into a locking recessed portion 41b of a rotor 41 of a rotation angle sensor S attached to the throttle body 10, and is brought into contact with a locking face portion 41c by a spring force of a rotor return spring 46.

According to the above-described configuration, once the throttle-valve shaft 20 is mechanically or electrically operated to rotate, this rotation is transmitted from the locking protruding portion 22 to the locking face portion 41c, so that the rotor 41 rotates in synchronization with the throttle-valve shaft 20. As a result, the rotation angle of the throttle-valve shaft 20 is detected by the rotation angle sensor S.

According to the rotation angle detection apparatus for a throttle-valve shaft in a throttle body, it is possible to reduce the resistance when the locking protruding portion 22 and the locking face portion 41c are in sliding contact with each other, and to thus suppress wear of the two. Accordingly, the rotation angle detection apparatus can stably and accurately detect the rotation angle of the throttle-valve shaft for a long period of time, in turn enabling the operating performance of the engine to be kept at a favorable level.

Moreover, it is possible to reduce the frequency of maintenance for the rotation angle detection apparatus, and thus to improve the maintainability of the engine.

Furthermore, the rotation angle detection apparatus can use a conventional rotation angle sensor as it is without any changes, and thus has compatibility.

An object of the present invention is to provide a rotation angle detection device which allows to retain the angle detection accuracy for a long period of time and to reduce the frequency of maintenance of a rotation angle sensor. A rotation angle detection device includes: a variable-resistance type rotation angle sensor including a rotor, a brush, and a rotor return spring, the rotor being rotatably arranged inside a casing and having a locking recessed portion concavely formed in an end portion of the rotor, the locking recessed portion having a pair of locking face portions formed therein, each of the locking face portions facing toward a center of the locking recessed portion, the brush being arranged on the rotor and moving in sliding contact with a resistor fixed to the casing, the rotor return spring urging the rotor rotationally in a certain direction; and a sensor drive shaft having a locking protruding portion integrally formed thereon, the locking protruding portion being inserted and arranged in the locking recessed portion of the rotor of the rotation angle sensor while being brought into contact with any of the locking face portions. The rotation angle detection device transmits rotation of the sensor drive shaft to the locking face portion of the rotor via the locking protruding portion, so as to output a voltage signal proportional to a rotational displacement of the sensor drive shaft. The locking protruding portion is formed of a cylindrical shaft having a circular cross-section and is arranged so that a longitudinal axis line of the cylindrical shaft is arranged in parallel with, and eccentrically with respect to, a longitudinal axis line of the sensor drive shaft, and the locking protruding portion formed of the cylindrical shaft is arranged to be brought into contact with the locking face portion of the rotor by the rotor return spring.

## Claims

1. A rotation angle detection device including:
a variable-resistance type rotation angle sensor including a rotor, a brush, and a rotor return spring, the rotor being rotatably arranged inside a casing and having a locking recessed portion concavely formed in an end portion of the rotor, the locking recessed portion having a pair of locking face portions formed therein, each of the locking face portions facing toward a center of the locking recessed portion, the brush being arranged on the rotor and moving in sliding contact with a resistor fixed to the casing, the rotor return spring urging the rotor rotationally in a certain direction; and
a sensor drive shaft having a locking protruding portion integrally formed thereon, the locking protruding portion being inserted and arranged in the locking recessed portion of the rotor of the rotation angle sensor while being brought into contact with any of the locking face portions,
the rotation angle detection device transmitting rotation of the sensor drive shaft to the locking face portion of the rotor via the locking protruding portion, so as to output a voltage signal proportional to a rotational displacement of the sensor drive shaft,
**characterized in that**
the locking protruding portion is formed of a cylindrical shaft having a circular cross-section and is arranged so that a longitudinal axis line (B)-(B) of the cylindrical shaft is arranged in parallel with, and eccentrically with respect to, a longitudinal axis line (C)-(C) of the sensor drive shaft (1), and
the locking protruding portion (2) formed of the cylindrical shaft is arranged to be brought into contact with the locking face portion (41c) of the rotor (41) by the rotor return spring (46).

2. The rotation angle detection device according to claim 1, wherein
the rotor is made of a synthetic resin material including glass fibers, and the locking protruding portion and the sensor drive shaft (1) are formed as separate members from each other, and
the locking protruding portion (2) is press-fitted into an end face (1a) of the sensor drive shaft (1).

3. The rotation angle detection device according to claim 2, wherein the locking protruding portion and the sensor drive shaft (1) are made of different materials from each other.

4. The rotation angle detection device according to claim 2, wherein a surface of the cylindrical shaft of the locking protruding portion is coated with a fluororesin, a polyamide resin, a polyacetal resin, and the like.

5. The rotation angle detection device according to claim 2, wherein hard chrome plating and a nitriding treatment are applied to a surface of the cylindrical shaft of the locking protruding portion.

6. The rotation angle detection device according to claim 1, wherein
the locking protruding portion and the sensor drive shaft (5) are formed integrally of a synthetic resin material, and
the locking protruding portion is formed of: cylindrical shaft portions (6a) and (6b) as well as a rib (6c), the cylindrical shaft portions (6a) and (6b) being formed eccentrically and symmetrically on opposite lateral sides with respect to the longitudinal axis line (C)-(C) of the sensor drive shaft (5), the rib (6c) connecting the cylindrical shaft portions (6a) and (6b) to each other and having a width (V) smaller than the diameter (W) of the cylindrical shaft portion.

7. A rotation angle detection apparatus for a throttle-valve shaft in a throttle body, comprising:
a throttle body (10) having an intake passage (11) drilled to penetrate an inside of the throttle body (10); and
a throttle-valve shaft (20) rotatably supported in the throttle body (10) while traversing the intake passage (11), the throttle-valve shaft (20) having a throttle valve (21) attached thereto for opening and closing the intake passage (11), wherein
a locking protruding portion (22) that is a cylindrical shaft having a circular cross-section is formed integrally on an end face (20a) of the throttle-valve shaft, the locking protruding portion (22) being arranged in parallel with a longitudinal axis line (N)-(N) of the throttle-valve shaft (20), and eccentrically with respect to the longitudinal axis line (N)-(N), and
the locking protruding portion is inserted into a locking recessed portion (41b) of a rotor (41) of a rotation angle sensor (S) attached to the throttle body (10), and is brought into contact with any of a pair of locking face portions (41c) by a rotor return spring (46), the pair of locking face portions (41c) being formed in the locking recessed portion so as to face toward a center thereof.
